Europäisches Patentamt

European Patent Office   (11) Veröffentlichungsnummer : **0 078 463**

Office européen des brevets                                **B1**

(12)                        **EUROPÄISCHE PATENTSCHRIFT**

(45) Veröffentlichungstag der Patentschrift :   (51) Int. Cl.⁴ : **G 02 F   1/17**
20.08.86

(21) Anmeldenummer : **82109750.8**

(22) Anmeldetag : **22.10.82**

---

(54) **Kontinuierliche Ladungssteuerung für elektrochrome Schichten.**

---

(30) Priorität : **29.10.81 DE 3142909**

(43) Veröffentlichungstag der Anmeldung :
**11.05.83 Patentblatt 83/19**

(45) Bekanntmachung des Hinweises auf die Patenterteilung : **20.08.86 Patentblatt 86/34**

(84) Benannte Vertragsstaaten :
**AT CH DE FR GB LI**

(56) Entgegenhaltungen :
**DE-A- 2 723 412**
**FR-A- 2 279 184**
**FR-A- 2 328 979**
**FR-A- 2 399 680**
**FR-A- 2 433 194**
**US-A- 4 294 519**
**Kmetz u. von Willisen: "Nonemissive Elctrooptic**
**Displays", Plenum Press,New York u. London, 1976,**
**S. 155-171**

(73) Patentinhaber : **Firma Carl Zeiss**
**D-7920 Heidenheim (Brenz) (DE)**

(72) Erfinder : **Ballmer, Horst, Dipl.-Ing.**
**Händelstrasse 25**
**D-7920 Heidenheim (Brenz) (DE)**

**Beschreibung**

Die Erfindung betrifft ein Verfahren und eine Vorrichtung zur Steuerung des Absorptionsgrades einer elektrochromen Schicht, bei der im entfärbten Zustand eine weitere Ladungsabfuhr nicht mehr möglich ist.

Elektrochrome Schichten werden beim Anlegen einer Spannung, bzw. bei Zufuhr von Ladungen, dunkel, d. h. ihr Absorptionsgrad nimmt zu. Beim Abzug der Ladungen werden die Schichten wieder transparent.

Die Ausnutzung dieser Erscheinung ist bekannt für Anzeigeelemente, wobei nur der transparente und der gefärbte Zustand verwendet werden. Dabei wird beim Färben eine definierte Zeit ein definierter Strom zugeführt. Eine zu große Zufuhr von Ladungen muß vermieden werden, weil sonst die Schicht zerstört wird. Dagegen ist der Entfärbevorgang unkritisch, weil nicht mehr Ladungen aus der Schicht entnommen werden können, als in ihr vorhanden sind und die völlig ladungsfreie Schicht auch die Schicht mit dem geringsten Absorptionsgrad ist. Ein wesentlicher Vorteil der elektrochromen Schichten besteht darin, daß sie nur während der Änderung ihres Absorptionsgrades Strom verbrauchen.

Aus der DE-A-2 723 412 ist eine Steuerschaltung für eine Anzeigeeinrichtung bekannt, bei der die einzelnen Segmente mit Konstantstromquellen verbunden sind. Dadurch wird eine Temperaturabhängigkeit des Absorptionsgrades vermieden und damit die Lesbarkeit verbessert.

Für Anzeigeelemente sind zwei Zustände der elektrochromen Schicht ausreichend. Für andere Anwendungszwecke, wie z. B. Sonnenschutzbrillen, optische Filter und abblendbare Spiegel sind jedoch Zwischenwerte vorteilhaft oder notwendig. Aus der FR-A-2 328 979 bzw. aus der DE-A-2 644 528 ist eine Linse mit elektrochromer Schicht bekannt, welche durch zeitweises Anlegen einer Gleichspannung der einen oder anderen Polarität mehr oder weniger stark gefärbt oder entfärbt wird. Nachteilig bei dieser bekannten Spannungsversorgung ist jedoch, daß die Schicht zu stark gefärbt und damit zerstört werden kann. Außerdem lassen sich keine definierten Zwischenwerte einstellen. Würde man für das Hin- und Herfahren zwischen verschiedenen Zwischenwerten gleiche Lade- und Entladezeiten bei gleichem Lade- und Entladestrom, d. h. gleiche Zu- und Abfuhr von Ladungen verwenden, dann würde die Schicht immer heller, da für das Färben mehr Ladung benötigt wird, als man für das Entfärben Ladung entnehmen kann. Das gilt jedenfalls für in neuerer Zeit verfügbare Arten von elektrochromen Schichten, bei denen Wolframoxid verwendet wird. Bei anderen Arten von elektrochromen Schichten können die Verhältnisse gerade umgekehrt liegen, so daß die Schicht immer dunkler wird.

Der vorliegenden Erfindung liegt daher die Aufgabe zugrunde, ein Verfahren und eine Anordnung für elektrochrome Schichten anzugeben, welche es ermöglicht, auch Zwischenwerte des Absorptionsgrades einzustellen, wobei auch bei mehrmaligem Wechsel zwischen Zwischenwerten eine ausreichende Reproduzierbarkeit erreicht wird und eine Zerstörung der Schicht durch zu große Ladungszufuhr mit Sicherheit vermieden wird.

Die gestellte Aufgabe wird gemäß der Erfindung dadurch gelöst, daß der elektrochromen Schicht für die Erreichung zahlreicher Absorptionsgrade einmal festgelegte Ladungsmengen in beliebiger Folge zu- bzw. abgeführt werden, daß die der elektrochromen Schicht während der Färbe- bzw. Entfärbevorgänge zu- bzw. abgeführten Ladungsmengen jeweils gemessen werden, um eine Information über den jeweiligen Ladungszustand der Schicht zu erhalten, daß der Färbe- bzw. Entfärbevorgang jederzeit gestoppt und gestartet werden kann, und daß beim Entfärben die abgeführten Ladungsmengen bei der Messung mit einem etwas geringeren Faktor berücksichtigt werden als es der festgelegten, tatsächlichen Entfärbung entspricht.

Eine zweckmäßige Ausgestaltung der Erfindung zeichnet sich dadurch aus, daß die Färbe- und Entfärbevorgänge über eine Steuerschaltung gestartet und gestoppt werden, daß während der Färbe- oder Entfärbevorgänge der elektrochromen Schicht von zwei Konstantstromquellen Ladungen zu- oder abgeführt werden und von einem Taktgenerator Zählimpulse an einen Auf/ab-Zähler gegeben werden, so daß der Zählerstand den Färbezustand der Schicht quantitativ kennzeichnet, und daß der Auf/ab-Zähler beim Erreichen des vollkommen ge- oder entfärbten Zustandes über die Steuerschaltung den Färbe- oder Entfärbevorgang abschaltet.

Eine vorteilhafte Ausführungsform zeichnet sich dadurch aus, daß die elektrochrome Schicht mit zwei Konstantstromquellen verbunden ist, über welche Ladungen zu- bzw. abgeführt werden, daß die Schalteingänge der Konstantstromquellen mit den beiden Ausgängen einer Steuerschaltung verbunden sind, daß die Ausgänge außerdem mit einem Taktgenerator verbunden sind, daß der Taktgenerator mit einem Auf/ab-Zähler verbunden ist und an diesen während eines Färbe- oder Entfärbevorganges Zählimpulse gibt, daß die zwei höchstwertigen Ausgänge des Auf/ab-Zählers mit der Steuerschaltung verbunden sind, und daß die Frequenz des Taktgenerators beim Entfärbevorgang größer als beim Färbevorgang ist. Dabei wird jedoch die Taktfrequenz für das Entfärben etwas zu niedrig eingestellt, so daß die Schicht immer etwas mehr entfärbt als gefärbt wird. Dadurch wird vermieden, daß selbst bei häufigem Wechsel von Zwischenwerten, die Schicht zu viel Ladung erhalten könnte und damit zerstört würde. Das ein wenig zu starke Entfärben der Schicht wird bei jeder Einstellung auf den völlig entfärbten Zustand ausgeglichen, da der Schicht nicht mehr als alle Ladungen entzogen werden können.

In einer anderen Ausführungsform werden bei gleicher Taktfrequenz Lade- und Entladestrom der Konstantstromquellen derart unterschiedlich eingestellt, daß die ungleiche Ladungsmenge für Färben und Entfärben fast ausgeglichen wird. In diesem Fall wird der Entladestrom ein klein wenig zu groß eingestellt, um bei häufigem Wechsel der Zwischenstufen eine Zerstörung der Schicht durch eine zu große Ladungsmenge mit Sicherheit zu vermeiden.

In beiden Fällen sind in einer vorteilhaften Ausgestaltung der Erfindung für die Konstantstromquellen Transistoren vorgesehen, die in Emitterschaltung über Basiswiderstände angesteuert werden.

Eine weitere vorteilhafte Ausgestaltung der Erfindung besteht in der Verwendung mehrerer Taktfrequenzen oder Ladeströme für den Färbevorgang.

Zum Betätigen des Färbe- bzw. Entfärbevorganges können Drucktasten oder Berührungssensoren vorgesehen werden. In einer vorteilhaften Ausführungsform ist die Steuerschaltung so aufgebaut, daß Tipptasten oder Berührungssensoren für Start und Stop des Färbe- bzw. Entfärbevorganges vorgesehen sind.

In einer weiteren vorteilhaften Ausgestaltung der Erfindung wird durch einen zusätzlichen Speicher und einen Komparator ein automatischer Stopp bei jedem Färbe- und/oder Entfärbevorgang ermöglicht, der bei einem beliebigen Zwischenwert gesetzt werden kann.

In einer besonders vorteilhaften Ausführungsform wird die Bestrahlungsstärke hinter der elektrochromen Schicht mit einem optischen Sensor gemessen und der Absorptionsgrad der Schicht automatisch so gesteuert, daß die Bestrahlungsstärke in einem vorgebbaren Bereich liegt.

Die Erfindung wird im folgenden an Hand der Figuren 1 bis 5 näher erläutert. Dabei zeigen :

Figur 1 ein Ausführungsbeispiel für die Anordnung mit je einer Drucktaste für Färben und Entfärben ;

Figur 2 ein Ausführungsbeispiel für die Verwendung von mehreren Taktfrequenzen für den Färbevorgang ;

Figur 3 ein Ausführungsbeispiel für die Erweiterung mit je einen Momenttaster für Start und Stopp von Färbe- bzw. Entfärbevorgang ;

Figur 4 ein Ausführungsbeispiel für die Erweiterung für einen programmierbaren Stopp bei einem beliebigen Zwischenwert ;

Figur 5 ein Ausführungsbeispiel für die Anordnung mit einem optischen Sensor für die automatische Steuerung des Absorptionsgrades.

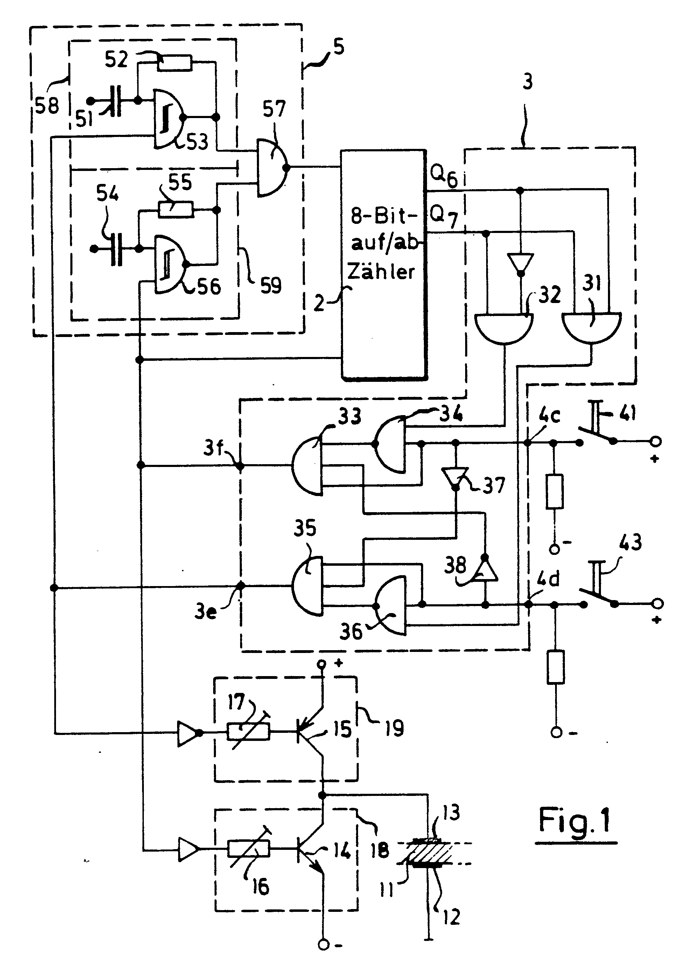

In Fig. 1 ist mit 11 die elektrochrome Schicht bezeichnet. Ihre Elektrode 12 liegt auf Nullpotential ; die Elektrode 13 ist mit den Konstantstromquellen 18 und 19 verbunden. Die Konstantstromquellen 18 und 19 bestehen aus dem NPN-Transistor 14 und dem PNP-Transistor 15, deren Emitter mit einer negativen bzw. einer positiven Spannungsquelle verbunden sind und deren gemeinsamer Verbindungspunkt mit der elektrochromen Schicht verbunden ist. Die Transistoren 14 und 15 werden über die Basiswiderstände 16 und 17 angesteuert, deren Größe über die Stromverstärkung der Transistoren alleine den Lade- bzw. Entladestrom für die Schicht bestimmt und begrenzt. Während des Färbens wird der NPN-Transistor 14 durchgesteuert ; beim Entfärben der PNP-Transistor 15.

Färbe- bzw. Entfärbestrom für die elektrochrome Schicht 11 werden ein- und ausgeschaltet durch den Schaltungsteil 3, der sowohl von den Bedienungstasten 41 und 43 als auch von den beiden höchstwertigen Ausgängen $Q_6$ und $Q_7$ des Zählers 2 beeinflußt wird.

Der Zähler 2 ist mit dem Taktgenerator 5 verbunden, in dem das der Ladungssteuerung zugrunde liegende Taktsignal beim Färben durch den Generator 59 und beim Entfärben durch den Generator 58 erzeugt wird.

Nach dem Einschalten der nicht gezeichneten Spannungsversorgung wird zunächst der Zähler 2 — mit einer bekannten, in der Zeichnung nicht dargestellten Einrichtung — mit seinem höchstwertigen Ausgang $Q_7$ auf « 1 » bzw. « H » und mit allen anderen Ausgängen auf « Ø » bzw. « L » gesetzt. Dieser Zustand charakterisiert den völlig gefärbten Zustand der Schicht ; er wird nach dem Einschalten der Spannungsversorgung zunächst einmal angenommen, damit die elektrochrome Schicht — unabhängig von dem Zustand in dem sie sich zufällig befindet — vollständig entfärbt wird.

Damit liegt am Ausgang des AND-Gatters 32 « 1 » und am Ausgang des AND-Gatters 31 « Ø ». Wird jetzt die Bedienungstaste 41 für Färben gedrückt, dann liegen beide Eingänge des NAND-Gatters 34 auf « 1 », der Ausgang liegt also auf « Ø ». Damit liegt einer der Eingänge des AND-Gatters 33 auf « Ø » und damit auch der Ausgang : Der Druck auf die Bedienungstaste 41 für Färben bleibt also wirkungslos, da der Zähler den Wert für die vollständig gefärbte Schicht hat und keine weitere Ladungszufuhr erfolgen darf.

Wird die Bedienungstaste 43 für Entfärben gedrückt, dann liegen die Eingänge des NAND-Gatters 36 auf « Ø » und « 1 », der Ausgang liegt also auf « 1 ». Damit liegen alle 3 Eingänge des AND-Gatters 35 auf « 1 » und somit auch der Ausgang : die Schicht wird entfärbt, zunächst so lange wie die Bedienungstaste 43 gedrückt wird. Während des Entfärbevorganges ist der Generator 58 aktiv. Er besteht aus dem Kondensator 51, dem Widerstand 52 und dem Schnitt-Trigger-NAND-Gatter 53 und gibt über das NAND-Gatter 57 Zählimpulse an den Auf/ab-Zähler 2. Der Auf/ab-Zähler 2 zählt, so lange das Signal am Auf/ab-Eingang nicht « H » ist, abwärts. Dabei bleibt der Ausgang des AND-Gatters 31 so lange « Ø » bis der Zähler in allen Stellen eine « Ø » hat und dann auf seinen nächsten Wert springt, bei dem alle Stellen eine « 1 » haben. In diesem Augenblick wird der Druck auf die Bedienungstaste 43 wirkungslos : die Schicht ist vollständig entfärbt, bzw. bei der ersten Inbetriebnahme nach dem Einschalten der Spannungsversorgung auch dann vollständig entfärbt, wenn sie vorher vollständig gefärbt war. Damit wird die Konstantstromquelle 19 passiv und der Taktgenerator 5 wird angehalten.

Der Zählerstand, bei dem alle Stellen « 1 » sind, repräsentiert also den völlig entfärbten Zustand. Er wird durch die beiden höchstwertigen Ausgänge $Q_7$ und $Q_6$ ausreichend gekennzeichnet. Nur in diesem Zustand ist der Ausgang des AND-Gatters 31 « 1 » und damit die Betätigung der Bedienungstaste 43 für Entfärben wirkungslos.

Wird z. B. in diesem Zustand die Taste 41 für Färben gedrückt, dann liegen die Eingänge des NAND-Gatters 34 auf « Ø » und « 1 », da der Ausgang des AND-Gatters 32 « Ø » ist. Damit liegt am Ausgang des NAND-Gatters 34 « 1 » und infolgedessen liegen alle 3 Eingänge des AND-Gatters 33 auf « 1 » und damit auch sein Ausgang : die Konstantstromquelle 18 für Färben wird aktiv und der Generator 59 gibt über das AND-Gatter 57 Zählimpulse an den Zähler 2. Da der Auf/ab-Eingang jetzt ebenfalls auf « H » liegt, zählt der Zähler aufwärts. Dabei bleibt der Ausgang des AND-Gatters 32 so lange « Ø » bis der Zähler in allen Stellen mit Ausnahme der höchstwertigen eine « 1 » hat und dann auf seinen nächsten Wert springt, bei dem nur die höchstwertige Stelle eine « 1 » hat. In diesem Augenblick wird der Druck auf die Bedienungstaste wirkungslos : die Schicht ist vollständig gefärbt, die Konstantstromquelle 18 wird passiv und der Taktgenerator 5 wird angehalten.

Der Zählerstand, bei dem nur die höchstwertige Stelle « 1 » ist, repräsentiert also den völlig gefärbten Zustand. Er wird durch die beiden höchstwertigen Ausgänge $Q_7$ und $Q_6$ ausreichend gekennzeichnet. Nur in diesem Zustand ist der Ausgang des AND-Gatters 32 « 1 » und damit die Betätigung der Bedienungstaste 41 für Färben wirkungslos.

In der Steuerschaltung 3 bewirken die Leitungen mit den Invertern 37 und 38, daß höchstens eine der beiden Bedienungstasten 41 und 43 wirksam werden kann.

Ein wesentlicher Vorteil der beschriebenen Anordnung besteht darin, daß die elektrochrome Schicht auf beliebig viele Färbzustände eingestellt werden kann. Im angegebenen Beispiel ergeben sich durch den 8-Bit-Zähler und die beschriebene Ausnutzung des Zählbereiches 128 Zwischenzustände. Diese Zahl kann selbstverständlich erhöht werden, indem ein Zähler mit mehr Bit verwendet wird. Für viele Anwendungsfälle wird man auch mit weniger Zwischenzuständen und damit mit weniger Bit auskommen. Von jedem der Zwischenzustände ist sowohl eine Änderung in Richtung Färben als auch in Richtung Entfärben möglich.

Elektrochrome Schichten haben die Eigenschaft, daß beim Färben mehr Ladungen zugeführt werden müssen als beim Entfärben abgeführt werden können. Diese ungleiche Ladungsbilanz wird bei der in Fig. 1 dargestellten Anordnung ausgeglichen, indem bei gleichem Färbe-und Entfärbestrom mit unterschiedlichen Taktfrequenzen gearbeitet wird. Die Taktfrequenz für das Entfärben ist etwas größer als die Taktfrequenz für das Färben, so daß die Entfärbevorgänge etwas weniger Zeit bekommen als die entsprechenden Färbevorgänge. Dabei muß jedoch zuverlässig vermieden werden, daß bei einem häufigen Wechsel zwischen Zwischenzuständen die elektrochrome Schicht immer etwas dunkler wird, was schließlich zur Zerstörung der Schicht führen könnte. Deswegen wird die Taktfrequenz für das Entfärben aus Sicherheitsgründen etwas zu klein eingestellt — aber immer noch erheblich größer als die Taktfrequenz für Färben — so daß die Schicht bei häufigen Wechsel zwischen Zwischenzuständen etwas zu hell wird. Dieser kleine Fehler kann immer wieder korrigiert werden, indem man die Schicht vollständig entfärbt, denn dabei können nicht mehr Ladungen entnommen werden als vorhanden sind.

Eine weitere Verbesserung für die Reproduzierbarkeit wird in einer weiteren Ausgestaltung der Erfindung dadurch erreicht, daß für den Färbevorgang mehrere Generatoren mit unterschiedlichen Frequenzen verwendet werden. Damit wird dem Umstand Rechnung getragen, daß bei elektrochromen Schichten beim Färbevorgang die Änderung des Absorptionsgrades nicht proportional zur zugeführten Ladung zunimmt, sondern mit zunehmend gefärbter Schicht geringer wird. (Dagegen besteht beim Entfärbevorgang Linearität zwischen abgeführter Ladung und Änderung des Absorptionsgrades).

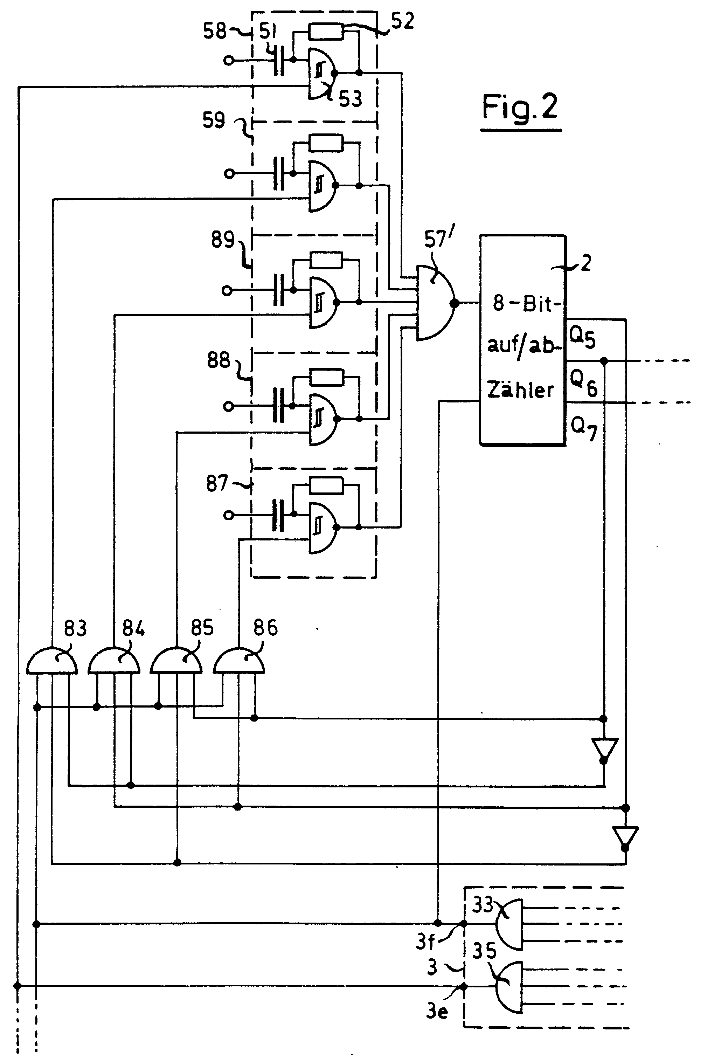

Fig. 2 zeigt ein Ausführungsbeispiel mit vier verschiedenen Generatoren für den Färbevorgang, die mit 59 und 87 bis 89 bezeichnet sind. Die Auswahl des jeweils aktiven Generators erfolgt über die Binärkombination der beiden höchstwertigen während des Färbevorganges sich ändernden Ausgänge $Q_6$ und $Q_5$ des Zählers 2. Die dazu notwendigen Verknüpfungen der Signale erfolgen in den AND-Gattern 83 bis 86. Wenn z. B. die Schicht vollständig entfärbt ist, dann liegt nach dem ersten Zählimpuls an den Ausgängen $Q_6 = L$ und $Q_5 = L$. Damit liegen am AND-Gatter 83 alle drei Eingänge auf « H » und der Generator 59 wird aktiv. Dagegen ist am AND-Gatter 84 der mittlere Eingang nicht « H », am AND-Gatter 85 der rechte Eingang nicht « H » und am AND-Gatter 86 der mittlere Eingang nicht « H », so daß die Generatoren 87 bis 89 nicht aktiviert werden. Sind am Ende des Färbevorganges $Q_6 = H$ und $Q_5 = H$ dann liegen alle drei Eingänge des AND-Gatters 86 auf « H » und der Generator 87 wird aktiv. Selbstverständlich ist es auch möglich nur 2 oder z. B. 8 Generatoren für den Färbevorgang zu verwenden.

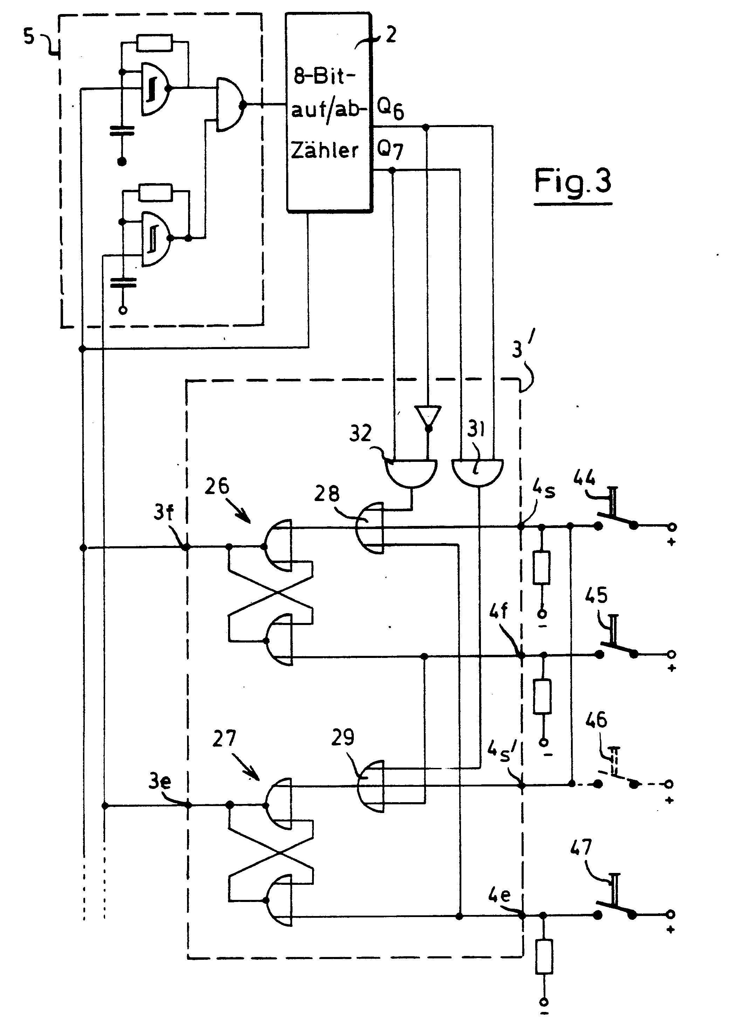

Fig. 3 zeigt eine andere Ausgestaltung der Erfindung, bei der die Drucktasten von Fig. 1, die während des gesamten Färbe- bzw. Entfärbevorganges gedrückt werden müssen, durch die Tipptasten 44 bis 47 ersetzt sind. Bei dieser Ausführungs müssen die Tasten 45 für Start Färben oder 47 für Start Entfärben nur kurz angetippt werden. Der Färbe- bzw. Entfärbevorgang läuft dann so lange bis entweder der völlig gefärbte bzw. entfärbte Zustand erreicht ist oder bis die Taste 44 für Stopp angetippt wird.

Die Vorgänge Färben bzw. Entfärben werden eingeschaltet über die aus jeweils zwei NOR-Gattern bestehenden Flipflops 26 bzw. 27. Der Ausgang dieser Flipflop geht nur auf « H » und setzt damit den Färbe- bzw. Entfärbevorgang in Gang, wenn die Taste Start Färben bzw. Start Entfärben gedrückt wird und alle Eingänge der vorgeschalteten OR-Gatter 28 bzw. 29 auf « L » liegen. Dazu muß Färben bzw. Entfärben, wie weiter oben beschrieben, auf Grund des Standes vom Zähler 2 möglich sein und es darf keine weitere Taste gedrückt werden. Die Flipflops 26 bzw. 27 werden zurück auf « L » gesetzt, und damit der Färbe- bzw. Entfärbevorgang abgebrochen, wenn entweder die Schicht vollständig gefärbt bzw. entfärbt ist und damit des Ausgang der AND-Gatter 32 bzw. 31 auf « H » geht, oder die Taste Start Entfärben 47 bzw. Start Färben 45 gedrückt wird oder wenn die Stopptaste 44 bzw. 46 gedrückt wird. Die zweite Stopptaste 46 ist vorgesehen für Anwendungen bei denen die Tasten Start Färben 45 und Start Entfärben 47 räumlich voneinander getrennt sind und bei jeder Starttaste eine Stopptaste wünschenswert ist. Das ist z. B. bei Sonnenschutzbrillen der Fall, wo man die Starttaste Färben an den Anfang des linken Fassungsbügels und die Starttaste Entfärben an den Anfang des rechten Fassungsbügels in Form von Berührungssensoren legen kann. Es ist dann zweckmäßig in jedem Bügel auch eine Stopptaste anzuordnen, die mit der gleichen Hand bedient werden kann.

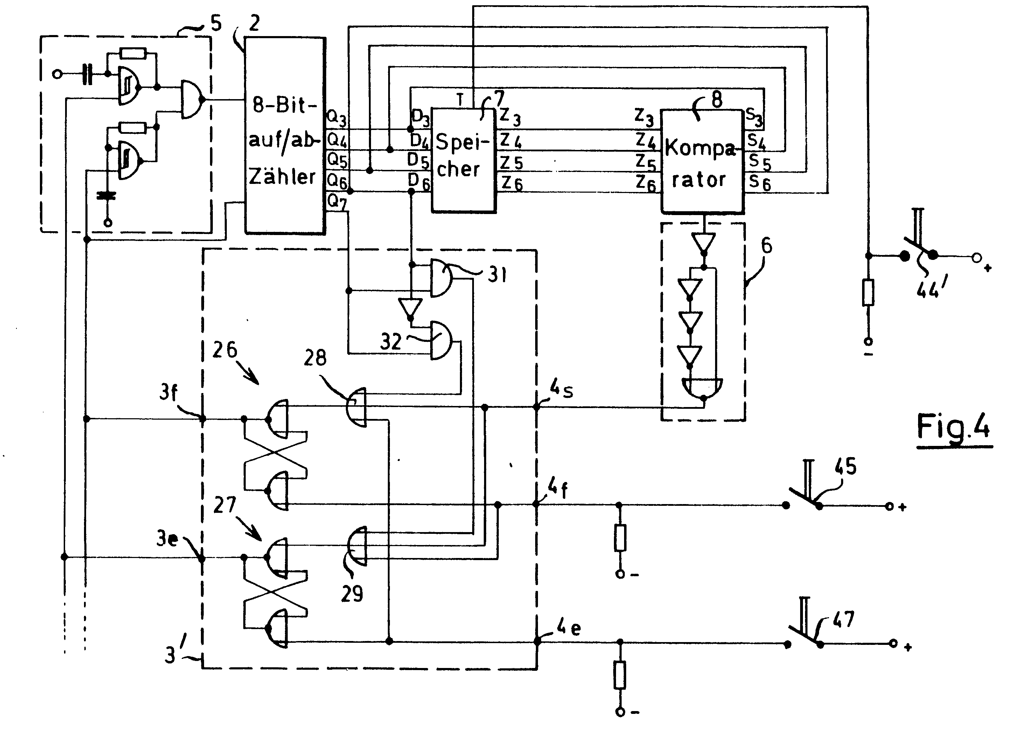

Als weitere Ausgestaltung der Erfindung zeigt Fig. 4 eine Anordnung, bei der ein beliebiger Zwischenwert als Stopp für den Färbe- bzw. Entfärbevorgang programmiert werden kann. Bei dieser Anordnung sind die 4 Ausgänge $Q_3$, $Q_4$, $Q_5$ und $Q_6$ des Zählers 2 mit den vier Eingängen $D_3$, $D_4$, $D_5$ und $D_6$ eines Vierfach-D-Flipflops 7 und gleichzeitig mit der mit S bezeichneten Seite eines Vierbitkomparators 8 verbunden. Außerdem sind die vier Ausgänge $Z_3$, $Z_4$, $Z_5$ und $Z_6$ des Vierfachflipflops 7 mit der mit Z bezeichneten Seite des Vierbitkomparators 8 verbunden. Die Stopptaste 44' ist mit dem Takteingang T des Vierfachflipflops 7 verbunden. Wenn in einem beliebigen Zustand der Schaltung die Stopptaste 44' betätigt wird, dann bewirkt die positive Flanke am Takteingang T des Vierfachflipflops 7, daß die momentanen Zustände des Zählerausganges ($Q_3$ bis $Q_6$) gespeichert und auf die vier Ausgänge $Z_3$ bis $Z_6$ des Vierfachflipflops gegeben werden. Damit liegt am Z- und am S-Eingang des Komparators 8 die gleiche Binärkombination. Der Ausgang Z = S des Komparators 8 wird also aktiv, d. h. er nimmt den Zustand « H » an. Die positive Flanke der Änderung des Ausganges von Z = S wird durch den Schaltungsteil 6, der aus Invertern und einem NOR-Gatter in bekannter Weise aufgebaut ist, differenziert und an die OR-Gatter 28 und 29 als kurzer « H »-Impuls gegeben. Dieser bewirkt, wie bereits bei Fig. 3 erläutert, den Stopp eines evtl. laufenden Färbe- bzw. Entfärbevorganges.

Da der Zustand der Ausgangsseite $Z_3$ bis $Z_6$ des Vierfachflipflops 7 erhalten bleibt tritt der Zustand Z = S beim Komparator 8 bei jedem Färbe- bzw. Entfärbevorgang zwischen vollständig gefärbt und vollständig entfärbt einmal ein. Der entsprechende Vorgang wird bei dem gespeicherten Zählerstand automatisch gestoppt. Ein einmal eingestellter Zwischenwert des Absorptionsgrades wird also lediglich durch Antippen der entsprechenden Starttaste immer wieder automatisch eingestellt. Selbstverständlich kann der Färbe- bzw. Entfärbevorgang über den automatischen Stopp hinaus durch erneutes Betätigen der entsprechenden Starttaste ausgeführt werden. Durch Betätigen der Stopptaste bei völlig entfärbter bzw. gefärbter Schicht fällt der programmierte Stopp praktisch mit den Endzuständen der Schicht zusammen, so daß er praktisch keine Wirkung mehr hat. Exakt mit den Endzuständen fällt er zusammen, wenn das Flipflop 7 und der Komparator 8 für 6 Bit ausgelegt sind. Die Praxis zeigt jedoch, daß für die meisten Anwendungsfälle 4 Bit ausreichend sind, d. h. der programmierbare Stopp kann 16 verschiedene Werte annehmen. Natürlich kann auch der Auf/ab-Zähler für mehr als 8 Bit ausgelegt werden. Auch hier zeigt jedoch die Erfahrung, daß die Erfassung von 128 Zwischenzuständen für die meisten Anwendungen völlig ausreicht und damit praktisch eine kontinuierliche Einstellmöglichkeit darstellt.

Wenn gewünscht wird, daß der programmierbare Stopp nur beim Färbe- oder nur beim Entfärbevorgang auftritt, ist es nur notwendig, das Flankendifferenzierglied 6 mit dem Komparatorausgang Z < S oder Z > S zu verbinden.

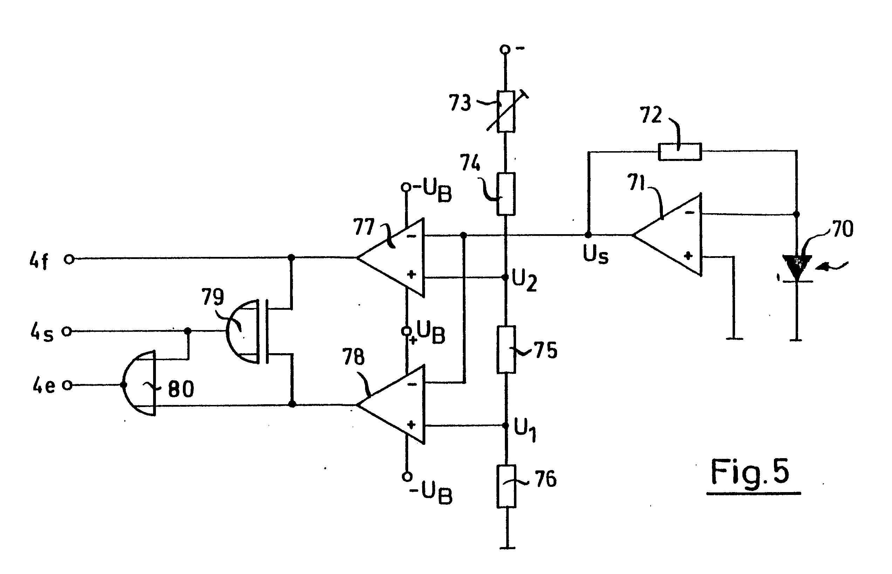

Eine besonders vorteilhafte Erweiterung der Erfindung ist in Fig. 5 dargestellt. Bei dieser Erweiterung wird die Bestrahlungsstärke hinter der elektrochromen Schicht von einem optischen Sensor gemessen und die Färbung der Schicht so gesteuert, daß hinter der Schicht immer die gleiche Bestrahlungsstärke vorliegt. Der optische Sensor 70 kann z. B. eine Pindiode oder ein Fototransistor sein. Das Signal der Pindiode wird zunächst von dem mit dem Widerstand 72 beschalteten Operationsverstärker 71 verstärkt. Anschließend wird es mit den am aus den Widerständen 73 bis 76 bestehendem Spannungsteiler liegenden Spannungen verglichen, wobei der Sollbereich durch den Widerstand 75 im Vergleich zu den übrigen Widerständen bestimmt wird.

Ist $U_s > U_1$, ist also die Beleuchtungsstärke kleiner als der durch den Spannungsteiler vorgegebene Sollbereich, dann liegt an den beiden invertierenden Eingängen der Operationsverstärker 77 und 78 eine positivere Spannung als an den nicht invertierenden Eingängen. Dadurch liegen beide Ausgänge der Operationsverstärker auf $-U_B$, also auf « L ». Damit liegt der Ausgang 4f, der die Taste Start Färben ersetzt, auf « L ». Der Ausgang 4s, der die Taste Stopp ersetzt, liegt über das EXOR-Gatter 79 ebenfalls auf « L ». Der Ausgang 4e, der die Taste Start Entfärben ersetzt, liegt durch das NOR-Gatter 80 auf « H ». Damit wird der Vorgang Entfärben gestartet.

Ist $U_s < U_1$ aber $> U_2$, liegt also die Beleuchtungsstärke innerhalb des vorgegebenen Sollbereiches, dann liegt der Ausgang des Operationsverstärkers 77 auf $-U_B$, also auf « L » und der des Operationsverstärkers 78 auf $+ U_B$ also auf « H ». Damit geht der Ausgang 4s für Stopp auf « H » ; die Ausgänge 4f für Start Färben und 4e für Start Entfärben werden « L » : Der Entfärbe- bzw. der Färbevorgang wird gestoppt ; die elektrochrome Schicht bleibt im Ruhezustand.

Ist $U_s < U_2$, ist also die Beleuchtungsstärke größer als der vorgegebene Sollbereich, dann liegen die Ausgänge der Operationsverstärker 77 und 78 auf $+ U_B$, also auf « H ». Damit liegt der Ausgang 4f für Start Färben auf « H » ; die Ausgänge 4s für Stopp und 4e für Start Entfärben liegen auf « L » : Der Färbevorgang wird gestartet.

Der Sollbereich für die Beleuchtungsstärke läßt sich durch den veränderbaren Widerstand 73 einstellen. Da damit auch die Größe des Sollbereiches verändert wird, ist es für manche Anwendungsgebiete zweckmäßig, mit dem Widerstand 73 auch den Widerstand 75 zu verändern oder ihn unabhängig einstellbar zu machen. Die Grenzen des Färbebereiches sind, ebenso wie bei den anderen Ausführungen, durch den Zähler 2 vorgegeben.

Das beschriebene Verfahren und die beschriebene Anordnung lassen sich besonders vorteilhaft z. B. bei Sonnenschutzbrillen anwenden. Die bekannten Sonnenschutzbrillen mit veränderlichem Absorptionsgrad durch die Verwendung von phototropen Gläsern haben den Nachteil, daß die Änderung des Absorptionsgrades zu langsam erfolgt und daß sie hinter den Windschutzscheiben von Autos ungenügend funktionieren. Diese Nachteile haben elektrochrome Schichten nicht. Mit den beschriebenen Schaltungsanordnungen läßt sich bei einer Sonnenschutzbrille mit elektrochromer Schicht der Absorptionsgrad entweder von Hand oder automatisch über eine Helligkeitssteuerung kontinuierlich einstellen. Bei der Einstellung von Hand kann ein beliebiger Absorptionsgrad auf einfachste Weise programmiert werden. Besonders vorteilhaft sind die beschriebenen Anordnungen bei Brillen mit optischer Wirkung, die dadurch als normale Brillen und als Sonnenbrillen verwendet werden können. Es ist auch möglich, die Brillenlinsen durch unterschiedliche Kontaktierung im oberen Bereich stärker zu färben als im unteren Bereich und damit die Wirkung der sogenannten Autofahrersonnenbrillen zu erreichen, bei denen das Armaturenbrett durch den weniger gefärbten Teil beobachtet wird.

Ein weiteres Anwendungsgebiet der beschriebenen Anordnungen sind optische Geräte, bei denen zeitweise ein Strahlengang geschwächt werden soll. So besteht z. B. bei Mikroskopen der Wunsch, daß das Bild auch bei unterschiedlicher Vergrößerung annähernd die gleiche Helligkeit hat. Hierfür wird an eine geeignete Stelle des Mikroskopstrahlenganges eine planparallele Glasplatte mit einer elektrochromen Schicht gebracht und deren Absorptionsgrad mit einer der beschriebenen Anordnungen verändert. So können z. B. die Tasten durch den Vergrößerungswechsler oder durch den Objektivrevolver betätigt werden. Besonders vorteilhaft ist die mit Fig. 5 beschriebene automatische Helligkeitssteuerung durch einen optischen Sensor, insbesondere bei Mikroskopen mit einer Zoom-Vergrößerungseinrichtung. In allen Fällen kann die elektrochrome Schicht auch auf ein schon vorhandenes optisches Teil aufgebracht werden.

Als weiteres Anwendungsgebiet kommen auch optische Anordnungen in Betracht, bei denen sich ein gefordertes unterschiedliches Reflexionsvermögen durch ein unterschiedliches Absorptionsvermögen ersetzen läßt. Ein Beispiel sind abblendbare Autorückspiegel. Die bekannte Ausführung besteht aus einer Glasplatte und einem hinter ihr angeordneten Spiegel, der im Falle eines zu starken Lichteinfalles weggeklappt wird. Diese Lösung hat jedoch Nachteile : Der Spiegel muß von Hand weggeklappt werden, was nur bei Innenspiegeln mit geringem mechanischen Aufwand möglich ist. Eine Automatisierung ist nur mit verhältnismäßig großem Aufwand möglich. Ein unterschiedliches Reflexionsvermögen läßt sich auch durch eine (feststehene) rückseitig verspiegelte Glasplatte erreichen, auf deren Vorderseite eine elektrochrome Schicht aufgebracht ist. Mit den mit Fig. 1 bis 4 beschriebenen Anordnungen kann eine zeitweise Abblendwirkung durch die Betätigung von Tasten erreicht werden, was insbesondere bei Außenspiegeln einen Vorteil bietet ; aber auch generell den Vorteil hat, daß die Tasten völlig unabhängig vom Spiegel plaziert werden können. Mit der mit Fig. 5 beschriebenen Erweiterung wird das Ab- bzw. Aufblenden automatisch durchgeführt, so daß der Fahrer von allen Bedienungsvorgängen entlastet wird.

**Patentansprüche**

1. Verfahren zur Steuerung des Absorptionsgrades einer elektrochromen Schicht, bei der im entfärbten Zustand eine weitere Ladungsabfuhr nicht mehr möglich ist, dadurch gekennzeichnet, daß der elektrochromen Schicht für die Erreichung zahlreicher Absorptionsgrade einmal festgelegte Ladungsmengen in beliebiger Folge zu- bzw. abgeführt werden, daß die der elektrochromen Schicht während der Färbe- bzw. Entfärbevorgänge zu- bzw. abgeführten Ladungsmengen jeweils gemessen werden, um eine Information über den jeweiligen Ladungszustand der Schicht zu erhalten, daß der Färbe- bzw. Entfärbevorgang jederzeit gestoppt und gestartet werden kann, und daß beim Entfärben die abgeführten Ladungsmengen bei der Messung mit einem etwas geringeren Faktor berücksichtigt werden als es der festgelegten, tatsächlichen Entfärbung entspricht.

2. Verfahren nach Anspruch 1, dadurch gekennzeichnet, daß die Färbe- und Entfärbevorgänge über eine Steuerschaltung (3 bzw. 3') gestartet und gestoppt werden, daß während der Färbe- oder Entfärbevorgänge der elektrochromen Schicht von zwei Konstantstromquellen (18, 19) Ladungen zu- oder abgeführt werden und von einem Taktgenerator (5) Zählimpulse an einen Auf/ab-Zähler (2) gegeben werden, so daß der Zählerstand den Färbezustand der Schicht quantitativ kennzeichnet, und daß der Auf/ab-Zähler (2) beim Erreichen des vollkommen ge- oder entfärbten Zustandes über die Steuerschaltung (3 bzw. 3') den Färbe- oder Entfärbevorgang abschaltet.

3. Anordnung zur Durchführung des Verfahrens nach Anspruch 2, dadurch gekennzeichnet, daß die elektrochrome Schicht mit zwei Konstantstromquellen (18, 19) verbunden ist, über welche Ladungen zu- bzw. abgeführt werden, daß die Schalteingänge der Konstantstromquellen (18, 19) mit den beiden Ausgängen (3f, 3e) einer Steuerschaltung (3 bzw. 3') verbunden sind, daß die Ausgänge (3f, 3e) außerdem mit einem Taktgenerator (5) verbunden sind, daß der Taktgenerator (5) mit einem Auf/ab-Zähler (2) verbunden ist und an diesen während eines Färbe- oder Entfärbevorganges Zählimpulse gibt, daß die zwei höchstwertigen Ausgänge des Auf/ab-Zählers (2) mit der Steuerschaltung (3 bzw. 3) verbunden sind, und daß die Frequenz des Taktgenerators (5) beim Entfärbevorgang größer ist als beim Färbevorgang, aber kleiner als es dem unterschiedlichen Ladungsbedarf bei Färben und Entfärben entspricht.

4. Anordnung zur Durchführung des Verfahrens nach Anspruch 2, dadurch gekennzeichnet, daß die elektrochrome Schicht mit zwei Konstantstromquellen (18, 19) verbunden ist, über welche Ladungen zu- bzw. abgeführt werden, daß die Schalteingänge der Konstantstromquellen (18, 19) mit den beiden Ausgängen (3f, 3e) einer Steuerschaltung (3 bzw. 3') verbunden sind, daß die Ausgänge (3f, 3e) außerdem mit einem Taktgenerator (5) verbunden sind, daß der Taktgenerator (5) mit einem Auf/ab-Zähler (2) verbunden ist und an diesen während eines Färbe- oder Entfärbevorganges Zählimpulse gibt, daß die zwei höchstwertigen Ausgänge des Auf/ab-Zählers (2) mit der Steuerschaltung (3 bzw. 3') verbunden sind, und daß der Entfärbestrom kleiner ist als der Färbestrom, aber größer als es dem unterschiedlichen Ladungsbedarf bei Färben und Entfärben entspricht.

5. Anordnung nach Anspruch 3, dadurch gekennzeichnet, daß für das Färben der Schicht mehrere Generatoren (59, 87, 88, 89) mit verschiedenen Frequenzen vorgesehen sind.

6. Anordnung nach einem der Ansprüche 3 bis 5, dadurch gekennzeichnet, daß für die Konstantstromquellen (18, 19) Transistoren (14, 15) in Emitterschaltung vorgesehen sind, welche über Basiswiderstände (16, 17) mit der Steuerschaltung (3 bzw. 3') verbunden sind.

7. Anordnung nach einem der Ansprüche 3 bis 6, dadurch gekennzeichnet, daß die Steuerschaltung (3) mit Drucktasten (41, 43) oder Berührungssensoren zum Betätigen des Färbe- bzw. Entfärbevorganges verbunden ist.

8. Anordnung nach einem der Ansprüche 3 bis 6, dadurch gekennzeichnet, daß die Steuerschaltung (3') mit Tipptasten (44 bis 47) oder Berührungssensoren für Start und Stop des Färbebzw. Entfärbevorganges verbunden ist.

9. Anordnung nach Anspruch 8, dadurch gekennzeichnet, daß ein Speicher (7) und ein Komparator (8) für den automatischen Stop eines Färbe- und/oder Entfärbevorganges bei einem beliebigen Zwischenwert vorgesehen sind.

10. Anordnung nach Anspruch 8, dadurch gekennzeichnet, daß die Steuerschaltung (3') mit einem Schaltungsteil (Fig. 5) für einen optischen Sensor verbunden ist.

11. Anordung nach Anspruch 10, dadurch gekennzeichnet, daß die Eingänge (4e, 4f, 4s) der Steuerschaltung (3') über logische Verknüpfungsglieder (79, 80) mit zwei Operationsverstärkern (77, 78) verbunden sind, deren nicht invertierende Eingänge mit einem Spannungsteiler (73 bis 76) und deren invertierende Eingänge über einen weiteren Operationsverstärker (71) mit dem optischen Sensor (70) verbunden sind.

12. Verwendung der Anordnung nach einem der Ansprüche 3 bis 11 für Sonnenschutzbrillen, abblendbare Spiegel und optische Filter.

**Claims**

1. A method of controlling the absorptance of an electrochromic layer, by which in the decolored state a further removing of charges is not possible, characterized by the fact that for achievement of a great many of values of absorptance once predetermined quantities of charges are fed to resp. removed from the electrochromic layer, that the quantities of charges which are fed to resp. removed from the electrochromic layer during the coloring resp. decoloring process are measured in order to receive informations about the particular state of charge, that the coloring and decoloring process can be started and stopped at any time and that at decoloring the removed charges are considered at the measurement with a slightly lower factor than it corresponds to the predetermined real decolorization.

2. A method according to claim 1, characterized by the fact that the coloring and decoloring processes are started and stopped by a control circuit (3 and 3' respectively), that during a coloring or decoloring process charges are fed or removed to or from the electrochromic layer by two sources of constant current (18, 19) and counting pulses are fed by a clock generator (5) to a forward/backward counter (2) so that the counter reading quantitatively characterizes the color state of the layer, and that the forward/backward counter (2) disconnects the coloring of decoloring process via the control circuit (3 or 3') when the completely colored or decolored state is reached.

3. An arrangement for carrying out the method according to claim 2, characterized by the fact that the electrochromic layer is connected with two sources of constant current (18, 19) by which charges are fed and removed respectively, that the switch inputs of the sources of constant current (18, 19) are connected to the two outputs (3f, 3e) of a control circuit (3 and 3' respectively), that the outputs (3f, 3e) are furthermore connected to a clock generator (5), that the clock generator (5) is connected with a forward/backward counter (2) and gives off counting pulses to it during a coloring or decoloring process, that the two highest-order outputs of the forward/backward counter (2) are connected to the control circuit (3 and 3' respectively), and that the frequency of the clock generator (5) is greater upon the decoloring process than upon the coloring process, but smaller than it corresponds to the different requirements of charges for coloring and decoloring.

4. An arrangement for carrying out the method of claim 2, characterized by the fact that the electrochromic layer is connected to two sources of constant current (18, 19) via which charges are fed and removed, that the switch inputs of the sources of constant current (18, 19) are connected to the two outputs (3f, 3e) of a control circuit (3 and 3' respectively), that the outputs (3f, 3e) are furthermore connected to a clock generator (5), that the clock generator (5) is connected to a forward/backward counter (2) and gives off counting pulses to it during a coloring or decoloring process, that the two highest-order outputs of the forward/backward counter (2) are connected to the control circuit (3 and 3' respectively), and that the decoloring current is smaller than the coloring current, but greater than it corresponds to the different requirements of charges for coloring and decoloring.

5. An arrangement according to claim 3, characterized by the fact that a plurality of generators (59, 87, 88, 89) of different frequency are provided for the coloring of the layer.

6. An arrangement according to any of claims 3 to 5, characterized by the fact that transistors (14, 15) are provided in emitter circuit for the sources of constant current (18, 19), the transistors being connected via base resistors (16, 17) with the control circuit (3 and 3' respectively).

7. An arrangement according to any of claims 3 to 6, characterized by the fact that the control circuit (3) is connected with push keys (41, 43) or contact sensors for actuating the coloring or decoloring process.

8. An arrangement according to any of claims 3 to 6, characterized by the fact that the control circuit (3') is connected with touch keys (44 to 47) or contact sensors for the starting and stopping of the coloring and decoloring process.

9. An arrangement according to claim 8, characterized by the fact that a storage (7) and a comparator (8) are provided for the automatic stopping of a coloring and/or decoloring process at any desired intermediate value.

10. An arrangement according to claim 8, characterized by the fact that the control circuit (3') is connected to a circuit part (Fig. 5) for an optical sensor.

11. An arrangement according to claim 10, characterized by the fact that the inputs (4e, 4f, 4s) of the control circuit (3') are connected via logic elements (79, 80) to two operational amplifiers (77, 78) whose non-inverting inputs are connected to a voltage divider (73 to 76) and whose inverting inputs are connected via a further operational amplifier (71) to the optical sensor (70).

12. Use of the arrangement according to any of claims 3 to 11 for sunglasses, dimmable mirrors and optical filters.

**Revendications**

1. Procédé pour la commande du degré d'absorption d'une couche électrochrome, dans laquelle, dans une condition décolorée, il n'est plus possible d'assurer une autre évacuation des charges, caractérisé en ce que la couche électrochrome est soumise, en vue d'atteindre de nombreux degrés d'absorption à une entrée et à une sortie de quantités de charges, déterminées initialement, selon une séquence quelconque, en ce que les quantités de charges introduites ou évacuées de la couche électrochrome pendant les processus de coloration ou de décoloration sont respectivement mesurées de façon à obtenir une information concernant la condition correspondante de charges de la couche, en ce que le processus de coloration ou de décoloration peut être amorcé et arrêté à tout moment, et en ce que, lors d'une décoloration, les quantités de charges évacuées sont prises en considération lors de la mesure avec un facteur un peu plus petit que celui qui correspond à la décoloration réelle établie.

2. Procédé selon la revendication 1, caractérisé en ce que les processus de coloration et de décoloration sont enclenchés et arrêtés par l'intermédiaire d'un circuit de commande (3, 3'), en ce que pendant les processus de coloration ou de décoloration de la couche électrochrome, des charges sont introduites ou évacuées par deux sources de courant constant (18, 19), et des impulsions de comptage sont fournies par un générateur de cadencement (5) à un compteur progressif/régressif (2), de telle sorte que le compte du compteur (2) caractérise quantitativement l'état de coloration de la couche, et en ce que le compteur progressif/régressif (2) arrête le processus de coloration ou de décoloration par l'intermédiaire du circuit de commande (3, 3') lorsque l'état complet de coloration ou de décoloration est atteint.

3. Dispositif pour la mise en œuvre du procédé selon la revendication 2, caractérisé en ce que la couche électrochrome est reliée à deux sources de courant constant (18, 19) par l'intermédiaire desquelles des charges sont introduites ou évacuées, en ce que les entrées de commutation des sources de courant constant (18, 19) sont reliées aux deux sorties (3f, 3e) d'un circuit de commande (3, 3'), en ce que les sorties (3f, 3e) sont en outre reliées à un générateur de cadencement (5), en ce que le générateur de cadencement est relié à un compteur progressif/régressif (2) et fournit à celui-ci des impulsions de comptage pendant un processus de coloration ou de décoloration, en ce que les deux sorties de valeurs maximales du compteur progressif/régressif (2) sont reliées au circuit de commande (3, 3'), et en ce que la fréquence du générateur de cadencement (5) est plus grande pendant le processus de décoloration que pendant le processus de coloration, mais est cependant plus petite que ce qui correspond à la différence entre les besoins en charges lors d'une coloration et lors d'une décoloration.

4. Dispositif pour la mise en œuvre du procédé selon la revendication 2, caractérisé en ce que la couche électrochrome est reliée à deux sources de courant constant (18, 19) par l'intermédiaire desquelles des charges sont introduites ou évacuées, en ce que les entrées de commutation des sources de courant constant (18, 19) sont reliées aux deux sorties (3f, 3e) d'un circuit de commande (3, 3'), en ce que les sorties (3f, 3e) sont en outre reliées à un générateur de cadencement (5), en ce que le générateur de cadencement est relié à un compteur progressif/régressif (2) et fournit à celui-ci des impulsions de comptage pendant un processus de coloration ou de décoloration, en ce que les deux sorties de valeurs maximales du compteur progressif/régressif (2) sont reliées au circuit de commande (3, 3'), et en ce que le courant de décoloration est plus petit que le courant de coloration, mais est cependant plus grand que ce qui correspond à la différence entre les besoins en charges lors d'une coloration et lors d'une décoloration.

5. Dispositif selon la revendication 3, caractérisé en ce qu'il est prévu, pour la coloration de la couche, plusieurs générateurs (59, 87, 88, 89) ayant des fréquences différentes.

6. Dispositif selon l'une des revendications 3 à 5, caractérisé en ce qu'il est prévu pour les sources de courant constant (18, 19), des transistors (14, 15) avec circuit d'émetteurs qui sont reliés au circuit de commande (3, 3') par l'intermédiaire de résistances de bases (16, 17).

7. Dispositif selon l'une des revendications 3 à 6, caractérisé en ce que le circuit de commande (3) est relié à des boutons-poussoirs (42, 43) ou à des détecteurs de contact pour l'enclenchement des processus de coloration ou de décoloration.

8. Dispositif selon l'une des revendications 3 à 6, caractérisé en ce que le circuit de commande (3') est relié à des touches à impulsions (44 à 47) ou à des détecteurs de contact pour l'enclenchement et l'arrêt des processus de coloration ou de décoloration.

9. Dispositif selon la revendication 8, caractérisé en ce qu'il est prévu une mémoire (7) et un comparateur (8) pour l'arrêt automatique d'un processus de coloration et/ou de décoloration à une valeur intermédiaire quelconque.

10. Dispositif selon la revendication 8, caractérisé en ce que le circuit de commande (3') est relié à une partie de circuit (Fig. 5) pour un capteur optique.

11. Dispositif selon la revendication 10, caractérisé en ce que les entrées (4e, 4f, 4s) du circuit de commande (3') sont reliées, par l'intermédiaire d'organes logiques de combinaison (79, 80) avec deux amplificateurs opérationnels (77, 78) dont les entrées non inverseuses sont reliées à un diviseur de tension (73 à 76) et dont les entrées inverseuses sont reliées, par l'intermédiaire d'un autre amplificateur opérationnel (71), avec le capteur optique (70).

12. Utilisation du dispositif selon l'une des revendications 3 à 11, pour des lunettes de protection solaire, des miroirs anti-éblouissement et des filtres optiques.

Fig.1

Fig.2

0 078 463

Fig.3

Fig. 4

0 078 463

Fig.5